# EUROPÄISCHE PATENTANMELDUNG

(11) **EP 0 864 636 A1**
(43) Veröffentlichungstag der Anmeldung: **16.09.1998**
(21) Anmeldenummer: 98101348.5
(22) Anmeldetag: 27.01.1998
(51) Int. Cl.: C10M 175/00, B01D 21/00

(54) **Verfahren und Vorrichtung zur Aufbereitung von Kühlschmierstoffen für Werkzeugmaschinen oder dgl.**

(30) Priorität: 11.03.1997 DE 19709860
(71) Anmelder: O & K Orenstein & Koppel AG, 44149 Dortmund (DE)
(72) Erfinder: Laudani, Giuseppe, 44866 Bochum (DE)
(74) Vertreter: Patentanwälte Meinke, Dabringhaus und Partner

(57) **Zusammenfassung**

Mit einem Verfahren und einer Vorrichtung zur Aufbereitung von Kühlschmierstoffen für Werkzeugmaschinen oder dgl., bei dem mit Fremdstoffen, insbesondere mit Metallpartikeln und Öl, verunreinigte Kühlschmierstoffe von den Fremdstoffen befreit werden, soll eine Lösung geschaffen werden, mit der eine Reinigung derartiger verunreinigter Kühlschmierstoffe in vergleichbarer Qualität wie bei einer Zentrifuge möglich ist, wobei die gereinigten Kühlschmierstoffe wieder verwendbar sein sollen und durch den Reinigungsprozeß der Betriebsablauf der Werkzeugmaschine nicht gestört werden soll und die Entsorgungs- und Betriebskosten gering sein sollen.

Dies wird dadurch erreicht, daß die verunreinigten Kühlschmierstoffe diskontinuierlich nacheinander durch mehrere kaskadenförmig angeordnete Absetzbehälter geleitet werden, in denen eine Trennung der Kühlschmierstoffe von den Fremdstoffen durch Sedimentation erfolgt.

## Beschreibung

Die Erfindung betrifft ein Verfahren zur Aufbereitung von Kühlschmierstoffen für Werkzeugmaschinen oder dgl., bei dem mit Fremdstoffen, insbesondere mit Metallpartikeln und Öl, verunreinigte Kühlschmierstoffe von den Fremdstoffen befreit werden, sowie eine Vorrichtung zur Durchführung eines solchen Verfahrens.

Beim Betrieb von Werkzeugmaschinen werden üblicherweise Kühlschmierstoffe eingesetzt, welche beim Arbeitsvorgang der Werkzeugmaschine mit Fremdstoffen, beispielsweise mit Metallpartikeln oder Öl verunreinigt werden. Es entsteht somit eine Flüssigkeitszusammensetzung aus Kühlschmierstoffen, die mit Fremdstoffen verunreinigt sind, welche anschließend entsorgt bzw. wieder aufgearbeitet werden muß.

Bekannt sind hierzu Systeme, bei denen eine Trennung von Ölanteilen und Kühlschmierstoffen sowie Wasser durch Verdampfen durchgeführt wird. Das Wasser kann dann problemlos in das Abwassersystem eingeleitet werden, während die ausgetrennten Teile einschließlich des Metallanteiles getrennt entsorgt werden. Dieses System ist jedoch hinsichtlich der Investitions- und Arbeitskosten aufwendig.

Darüber hinaus sind mobile Zentrifugen bekannt, die zur jeweiligen Werkzeugmaschine transportiert werden und im By-pass den Kühlschmierstoff in einem mehrstündigen Einsatz von Verschmutzungen befreien und somit die Standzeit des Kühlschmierstoffes verlängern. Der Nachteil dieses Systems ist jedoch der hohe Handhabungsaufwand und die Störung des Ablaufs an der Werkseugmaschine, was hohe Kosten zur Folge hat.

Aufgabe der Erfindung ist es deshalb, eine Lösung zu schaffen, mit der eine Reinigung derartiger verunreinigter Kühlschmierstoffe in vergleichbarer Qualität wie bei einer Zentrifuge möglich ist, wobei die gereinigten Kühlschmierstoffe wieder verwendbar sein sollen und durch den Reinigungsprozeß der Betriebsablauf der Werkzeugmaschine nicht gestört werden soll und die Entsorgungs- und Betriebskosten gering sein sollen.

Diese Aufgabe wird mit einem Verfahren der eingangs bezeichneten Art erfindungsgemäß dadurch gelöst, daß die verunreinigten Kühlschmierstoffe diskontinuierlich nacheinander durch mehrere kaskadenförmig angeordnete Absetzbehälter geleitet werden, in denen eine Trennung der Kühlschmierstoffe von Fremdstoffen durch Sedimentation erfolgt.

Es hat sich herausgestellt, daß mit einem solchen diskontinuierlichen Sedimentationsverfahren eine gute Reinigung und damit Wiederverwertbarkeit des Kühlschmiermittels ermöglicht wird. Das Verfahren stört dabei den Betriebsablauf der Werkzeugmaschine nicht, da die verunreinigten Kühlschmierstoffe an der jeweiligen Werkzeugmaschine gesammelt und dann unabhängig von der Werkzeugmaschine gereinigt werden können. Das Verfahren spart gegenüber aufwendigen Zentrifugen ersichtlich Betriebskosten, ist innerbetrieblich anwendbar und es fallen nur geringe Entsorgungskosten an.

Zur Verbesserung des Reinigungsergebnisses ist vorteilhaft vorgesehen, daß die zu reinigenden Kühlschmierstoffe beim Übergang von einem Absetzbehälter zum nächsten gefiltert werden. Diese Filterung kann beispielsweise dadurch erfolgen, daß die zu reinigende Flüssigkeit durch geeignete Filtermatten oder dgl. geführt werden.

Um eine Abtrennung des Öls aus der Gesamtflüssigkeit zu erreichen, ist vorteilhaft vorgesehen, daß am Ende des Sedimentationsvorganges wenigstens im ersten Absetzbehälter die an der Flüssigkeitsoberfläche abgesetzten Ölbestandteile abgesaugt werden. Die Ölbestandteile können dann anschließend, falls erforderlich oder gewünscht, einer Altölaufbereitung zugeführt werden.

Weiterhin ist vorteilhaft vorgesehen, daß wenigstens im letzten Absetzbehälter während des Sedimentationsvorganges Luft in den Absetzbehälter eingeblasen wird. Diese Lufteinblasung nach der Entfernung des aufschwimmenden Öls in den vorangehenden Trennstufen dient zur Zerstörung bzw. Zersetzung von anäroben Bakterien, die sich in den vorangehenden Trennstufen unter dem durch das aufschwimmende Öl gegebenen Luftabschluß gebildet haben können.

Zur Bakterientötung kann zusätzlich auch noch vorgesehen sein, daß die gereinigten Kühlschmierstoffe nach dem Austritt aus dem letzten Absetzbehälter mit UV-Licht bestrahlt werden. Diese Bestrahlung mit intensivem UV-Licht führt dann zur einer weitgehend vollständigen Bakterientötung.

Als besonders vorteilhaft hat es sich erwiesen, daß wenigstens drei hintereinander angeordnete Absetzbehälter eingesetzt werden, wobei der Sedimentationsvorgang im ersten Absetzbehälter etwa vier Stunden, der Sedimentationsvorgang im zweiten und dritten Absetzbehälter jeweils etwa zwei Stunden durchgeführt wird. Die Behälter können beispielsweise Volumina von 1.000 bis 2.000 l aufweisen.

Zur Lösung der eingangs gestellten Aufgabe sieht die Erfindung auch eine Vorrichtung zur Durchführung des vorbeschriebenen Verfahrens vor, die durch mehrere kaskadenförmig hintereinander angeordnete miteinander trennbar verbundene Absetzbehälter gekennzeichnet ist.

Vorteilhaft sind dabei zwischen den einzelnen Absetzbehältern jeweils Filter angeordnet, welche beispielsweise als Filtermatten ausgebildet sein können.

Um eine Entfernung von während des Sedimentationsvorganges an der Flüssigkeitsoberfläche abgesetzten Ölpartikeln zu ermöglichen, ist vorteilhaft vorgesehen, daß wenigstens der erste Absetzbehälter mit einer Ölabsaugungseinrichtung ausgerüstet ist.

Weiterhin ist vorteilhaft vorgesehen, daß wenigstens der letzte Absetzbehälter mit einer Lufteinblasungseinrichtung ausgerüstet ist, die zur Bakterienzersetzug dient.

Zusätzlich kann vorteilhaft vorgesehen sein, daß hinter dem letzten Absetzbehälter eine UV-Bestrahlungseinrichtung zur Bestrahlung der gereinigten Kühlschmierstoffe angeordnet ist.

Um die Absetzbehälter nach Ende des Sedimentationsvorganges einfach reinigen und damit handhaben zu können, sind die Absetzbehälter vorteilhaft mit einer herausnehmbaren Schlammwanne versehen.

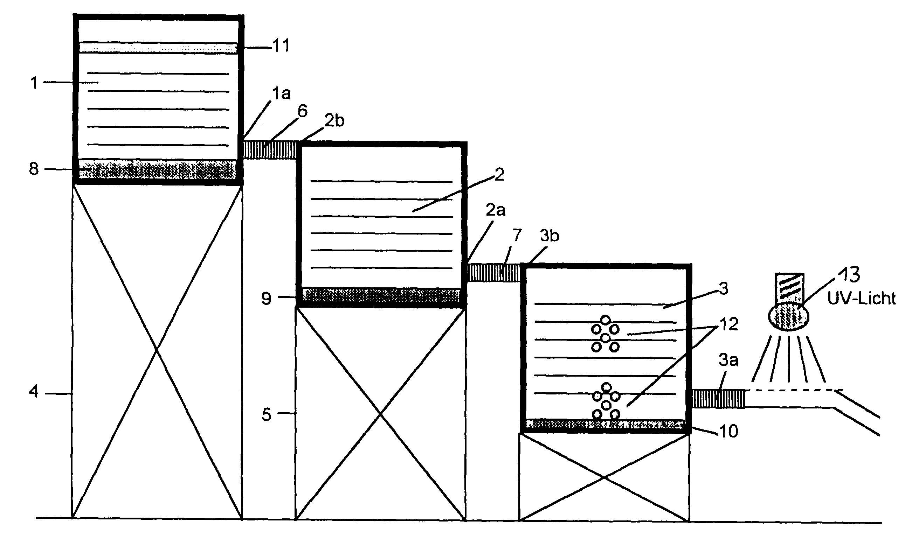

Die Erfindung ist nachstehend anhand der Zeichnung beispielsweise näher erläutert. Diese zeigt in der einzigen Figur vereinfacht eine Vorrichtung zur Durchführung des erfindungsgemäßen Verfahrens.

Eine solche Vorrichtung weist beim dargestellten Ausführungsbeispiel drei kaskadenförmig hintereinander angeordnete Absetzbehälter 1,2,3 auf. Dabei ist der erste Absetzbehälter 1 auf einem Gestell 4 in einer Höhe angeordnet, daß sich sein mit 1a angedeuteter Austrittsbereich auf einem Höhenniveau befindet, das in etwa dem oberen Randbereich des zweiten Absetzbehälters entspricht. Der zweite Absetzbehälter 2 ist auf einem gegenüber dem Gestell 4 niedrigeren Gestell 5 angeordnet, derart, daß sich sein Austrittsbereich 2a auf einem Höhenniveau befindet, das in etwa dem oberen Randbereich des dritten Absetzbehälters 3 entspricht, welcher selbst auf einer Bodenfläche angeordnet ist.

Zwischen dem Austrittsbereich 1a und dem Eintrittsbereich 2b des zweiten Absetzbehälters 2 ist eine verschließbare Leitungsverbindung vorgesehen, welche mit einem Filter ausgerüstet ist, dies ist mit dem Bezugszeichen 6 angedeutet. Gleichermaßen ist auch zwischen dem Austrittsbereich 2a des zweiten Absetzbehälters 2 und dem Eintrittsbereich 3b des dritten Absetzbehälters 3 eine schließbare Leitungsverbindung vorgesehen, welche ebenfalls mit einem Filter 7 ausgerüstet ist. Die Filter 6 und 7 können dabei beispielsweise von Filtermatten gebildet sein.

Der dritte bzw. letzte Absetzbehälter 3 weist einen verschließbaren Austritt 3a auf. Dieser Austritt 3a sowie die Austrittsbereiche 1a und 2a der Absetzbehälter 1 und 2 sind jeweils in den Bodenbereichen der Absetzbehälter 1,2 bzw. 3 angeordnet, allerdings etwas oberhalb der jeweiligen Behälterbodenfläche, nämlich oberhalb einer in den jeweiligen Behälter eingesetzten Schlammwanne 8,9 bzw. 10.

Im ersten Absetzbehälter 1 ist im oberen Bereich eine Ölabsaugeinrichtung vorgesehen, diese ist nur angedeutet und mit dem Bezugszeichen 11 bezeichnet. Im letzten Absetzbehälter 3 ist eine Lufteinblasungseinrichtung 12 vorgesehen, die ebenfalls nur angedeutet ist.

Die aus verunreinigtem Kühlschmiermittel bestehende, zu reinigende Flüssigkeit wird zunächst in den Absetzbehälter 1 eingegeben, dieser Absetzbehälter kann beispielsweise ein Volumen von 1.500 l aufweisen. Die Flüssigkeit wird dann etwa vier Stunden in diesem Behälter belassen, so daß sich im Absetzbehälter 1 ein entsprechender Sedimentationsvorgang ergibt. Metallpartikel und dgl. sinken zu Boden und sammeln sich in der Schlammwanne 8, während Ölbestandteile sich an der Oberfläche der Flüssigkeit im Absetzbehälter 1 absetzen und von der Ölabsaugeinrichtung 11 abgesaugt werden können. Nach dem Ende der Sedimentationszeit wird der Austritt 1a geöffnet und die bereits vorgereinigte Flüssigkeit tritt durch die Filtermatten 6 hindurch in den zweiten Absetzbehälter 2 ein.

Dieser Absetzbehälter 2 weist beispielsweise ebenfalls ein Volumen von 1.500 l auf. Die Flüssigkeit wird in diesem Behälter beispielsweise zwei Stunden belassen, so daß sich hier wiederum ein entsprechender Sedimentationsvorgang einstellt, wobei schwerere Partikel sich in der dortigen Schlammwanne 9 sammeln. Anschließend wird der Auslaß 2a geöffnet und die weiter gereinigte Flüssigkeit tritt durch die Filtermatten 7 hindurch in dem letzten Absetzbehälter 3 ein. In diesem Absetzbehälter 3, der auch ein Volumen von 1.500 l aufweist, erfolgt eine Sedimentation in einem Zeitraum von ebenfalls zwei Stunden, dabei wird zeitweise oder kontinuierlich durch die Lufteinblasungseinrichtung 12 Luft in den Absetzbehälter 2 eingeblasen. Diese Lufteinblasung nach der Entfernung des aufschwimmenden Öls in den vorangehenden Trennstufen dient zur Zerstörung bzw. Zersetzung von anäroben Bakterien, die sich in den vorangehenden Trennstufen unter dem durch das aufschwimmende Öl gegebenen Luftabschluß gebildet haben können. Feste Partikel, wie Metallpartikel, sammeln sich auch hier in der Schlammwanne 10. Nach dem Ende des Sedimentationsvorganges in diesem letzten Absetzbehälter 3 wird der Auslaß 3a geöffnet, durch den gereinigte Kühlschmierstoffe abgezogen werden, die dann wieder verwendet werden können.

Hinter dem letzten Absetzbehälter 3 ist eine UV-Bestrahlungseinrichtung 13 zur Bestrahlung der gereinigten Kühlschmierstoffe angeordnet, mit der eine Abtötung von etwa noch vorhandenen Bakterien erfolgen kann.

Natürlich ist die Erfindung nicht auf das dargestellte Ausführungsbeispiel beschränkt. Weitere Ausgestaltungen sind möglich, ohne den Grundgedanken zu verlassen. So können selbstverständlich auch mehr als drei Absetzbehälter vorgesehen sein, wenn dies im Einzelfall erforderlich ist. Außerdem kann die Größe und Anordnung der Absetzbehälter anders gewählt werden und dgl. mehr.

## Patentansprüche

1. Verfahren zur Aufbereitung von Kühlschmierstoffen für Werkzeugmaschinen oder dgl., bei dem mit Fremdstoffen, insbesondere mit Metallpartikeln und Öl, verunreinigte Kühlschmierstoffe von den Fremdstoffen befreit werden,
dadurch gekennzeichnet,
daß die verunreinigten Kühlschmierstoffe diskontinuierlich nacheinander durch mehrere kaskadenförmig angeordnete Absetzbehälter geleitet werden, in denen eine Trennung der Kühlschmierstoffe von den Fremdstoffen durch Sedimentation erfolgt.

2. Verfahren nach Anspruch 1,
dadurch gekennzeichnet,
daß die zu reinigenden Kühlschmierstoffe beim Übergang von einem Absetzbehälter zum nächsten gefiltert werden.

3. Verfahren nach Anspruch 1 oder 2,
dadurch gekennzeichnet,
daß am Ende des Sedimentationsvorganges wenigstens im ersten Absetzbehälter die an der Flüssigkeitsoberfläche abgesetzten Ölbestandteile abgesaugt werden.

4. Verfahren nach Anspruch 1 oder einem der folgenden,
dadurch gekennzeichnet,
daß wenigstens im letzten Absetzbehälter während des Sedimentationsvorganges Luft in den Absetzbehälter eingeblasen wird.

5. Verfahren nach Anspruch 1 oder einem der folgenden,
dadurch gekennzeichnet,
daß die gereinigten Kühlschmierstoffe nach dem Austritt aus dem letzten Absetzbehälter mit UV-Licht bestrahlt werden.

6. Verfahren nach Anspruch 1 oder einem der folgenden,
dadurch gekennzeichnet,
daß wenigstens drei hintereinander angeordnete Absetzbehälter eingesetzt werden, wobei der Sedimentationsvorgang im ersten Absetzbehälter etwa vier Stunden, der Sedimentationsvorgang im zweiten und dritten Absetzbehälter jeweils etwa zwei Stunden durchgeführt wird.

7. Vorrichtung zur Durchführung des Verfahrens nach einem oder mehreren der Ansprüche 1 bis 6,
gekennzeichnet durch
mehrere kaskadenförmig hintereinander angeordnete, miteinander trennbar verbundene Absetzbehälter (1,2,3).

8. Vorrichtung nach Anspruch 7,
dadurch gekennzeichnet,
daß zwischen den einzelnen Absetzbehältern (1,2,3) jeweils Filter (6,7) angeordnet sind.

9. Vorrichtung nach Anspruch 7 oder 8,
dadurch gekennzeichnet,
daß wenigstens der erste Absetzbehälter (1) mit einer Ölabsaugungseinrichtung (11) ausgerüstet ist.

10. Vorrichtung nach Anspruch 7 oder einem der folgenden,
dadurch gekennzeichnet,
daß wenigstens der letzte Absetzbehälter (3) mit einer Lufteinblasungseinrichtung (12) ausgerüstet ist.

11. Vorrichtung nach Anspruch 7 oder einem der folgenden,
dadurch gekennzeichnet,
daß hinter dem letzten Absetzbehälter (3) eine UV-Bestrahlungseinrichtung (13) zur Bestrahlung der gereinigten Kühlschmierstoffe vorgesehen ist.

12. Vorrichtung nach Anspruch 7 oder einem der folgenden,
dadurch gekennzeichnet,
daß die Absetzbehälter (1,2,3) mit einer herausnehmbaren Schlammwanne (8,9,10) versehen sind.
